(19) Europäisches Patentamt
European Patent Office
Office européen des brevets

(11) Publication number: 0 093 952
A1

# EUROPEAN PATENT APPLICATION

(21) Application number: 83104105.8

(22) Date of filing: 27.04.83

(51) Int. Cl.³: C 01 B 25/01, C 01 B 25/12, C 01 B 25/20

(30) Priority: 10.05.82 US 376335

(43) Date of publication of application: 16.11.83 Bulletin 83/46

(84) Designated Contracting States: AT BE CH DE FR GB IT LI LU NL SE

(71) Applicant: OCCIDENTAL RESEARCH CORPORATION, 2100 S.E. Main Street, Irvine, California 92714 (US)

(72) Inventor: Hard, Robert A., 862 Summit Drive, Laguna California 92651 (US)

(74) Representative: Jack, Bruce James et al, FORRESTER & BOEHMERT Widenmayerstrasse 4/I, D-8000 Munchen 22 (DE)

(54) **Process for reducing phosphate ore.**

(57) A process for producing, for example, phosphorus pentoxide from phosphorus ore includes formulation of a feed with a phosphate ore, silica and solid carbonaceous material in amounts to produce a feed mixture having a $CaO/SiO_2$ mole ratio of less than about 0.5. The feed mixture is formed into agglomerated feed particles and the particles are heated by exposure to radiation eminating from an oxidation zone to a temperature sufficient to reduce the phosphate by reaction with the solid carbonaceous material to form elemental phosphorus vapor without substantial melting of the agglomerated feed particles. Sufficient oxygen-containing gas is provided to cause oxidation of the elemental phosphorus vapor within the oxidation zone to produce phosphorus pentoxide.

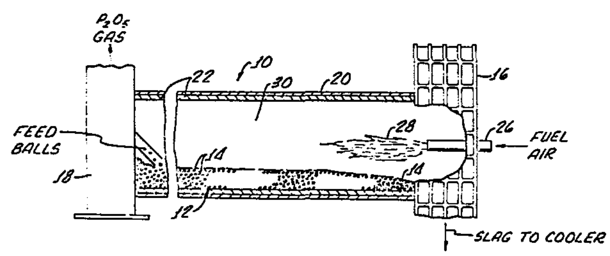


EP 0 093 952 A1

Process for Reducing Phosphate Ore

THE PRESENT INVENTION relates to a process for reducing phosphate ore and, in particular, the invention relates to the reduction of phosphate and phosphate ores, such as fluorapatite, by reaction with carbonaceous material.

Processes for reducing phosphate ore using carbonaceous material, to produce elemental phosphorus gas, have been known for some time. Such reduction may be accomplished in an electric-arc furnace, or in a rotary kiln such as generally described in U.S. Patent Nos. 3,235,330 and 3,241,917.

In the rotary kiln furnace process for producing phosphorus pentoxide, a reaction bed comprised of fluorapatite ore, carbonaceous material and silica balls is heated to reductively extract elemental phosphorus which, in turn, is burned over the reaction bed to provide a portion of the heat necessary for the endothermic reduction reaction between carbon and the phosphate ore. The rotary kiln process may be more energy efficient than the electric-arc furnace process in which the reduced elemental phosphorus must be burned separately to form phosphorus pentoxide and consequently the heat of oxidation therefrom is not effectively recovered.

Although the rotary kiln process has been known for some time, the process has heretofore not been commercially practical because of poor phosphorus yield therefrom; and, because the phosphate ore required extensive beneficiation in order to remove impurities, requiring considerable capital expenditure and additional production expense, the process was also economically inefficient.

Two of the major problems associated with the rotary kiln phosphate ore process involve melting of the feed material, or reaction bed, within the rotary kiln and "burnout" of the carbon within the reaction bed. "Burnout"

occurs when contact between the oxidising zone within the rotary kiln and the reaction bed causes oxidation of the carbon in the bed before reaction between the carbon and the phosphate ore.

Some melting of the feed materials within the rotary kiln can be tolerated. However, if more than about 40% of the reaction bed begins to melt, agglomeration of the feed particles within the reaction bed may occur. Such agglomerates may grow in size and adhere to interior surfaces of the kiln thus blocking movement of the reaction bed through the kiln and, in addition, inhibit the reduction of the phosphate ore by the carbonaceous material.

Many attempts have been made to increase the yield of the rotary kiln phosphate ore process to commercial feasibility. However, to date, none of the efforts involving rotary kiln processes for the production of phosphoric acid or phosphorus pentoxide have been economically efficient with regard to extracting a major portion of the phosphorus from the phosphate ore.

The present invention is directed to a process for reducing phosphate in phosphate containing ores, without significant beneficiation of the ore, and to producing a phosphorus pentoxide, which may then be rehydrated to form phosphoric acid, at a very efficient rate without the necessity of beneficiating the phosphate ore.

The present invention provides a process for reducing phosphate ore, comprising the steps of mixing phosphate ore with silica and solid carbonaceous material in amounts to produce a feed mixture having a $CaO/SiO_2$ mole ratio less than about 0.5; forming the feed mixture into agglomerated feed particles; heating the agglomerated feed particles, by exposure to radiation emanating from an oxidation zone, to a temperature sufficient to reduce the phosphate in the agglomerated feed particles by reaction with the solid carbonaceous material to form elemental phosphorus vapors without substantial melting of the agglomerated feed particles; and, providing sufficient oxygen-containing gas to cause oxidation of the elemental phosphorus vapor within the oxidation zone to produce a phosphorus compound and to heat the agglomerated feed particles.

The process of the invention is particularly suitable for producing phosphorus pentoxide from phosphate ore.

The phosphate ore may be unbeneficiated, and/or may be washed to remove clays therefrom.

Such a phosphate ore may then be mixed with silica and solid carbonaceous material in amounts to produce a feed mixture having a $CaO/SiO_2$ mole ratio of approximately 0.3 the mixture being co-ground so that 50 to 85 percent of the co-ground feed mixture passes a -325 mesh (all mesh sizes given relate to the U.S. Standard Sieve Series).

After forming the co-ground feed mixture into agglomerated feed particles the particles are heated to a temperature greater than approximately 1300°C for approximately 30-45 minutes, by exposure to an oxidation zone within a rotary-type kiln. Further, sufficient oxygen-containing gas is introduced into the rotary-type kiln to cause oxidation of the elemental phosphorus vapor produced by the reaction between the phosphate ore and the solid carbonaceous material within an oxidation zone disposed over the agglomerated feed particles within the kiln in order to cause oxidation of the elemental phosphorus vapor to produce phosphorus pentoxide and also to heat the agglomerated feed particles.

It has now been discovered that if the silica content of feed particles is such that the $CaO/SiO_2$ mole ratio in the feed mixture is less than about 0.5, and preferably about 0.3, the process can recover about 85 percent of the phosphate values in the form of phosphorus pentoxide.

An additional, and important, feature of the present invention is the fact that addition of $SiO_2$ to the feed mixture to the extent of producing a $CaO/SiO_2$ ratio of less than about 0.5, enables the use of unbeneficiated or, washed, phosphate ore. Alternatively, if the phosphate ore, as mined, has a $CaO/SiO_2$ ratio of less than about 0.5 the phosphate ore may be used in the process of the present invention without any beneficiation. This significantly reduces the cost of producing phosphorus pentoxide by the process of the present invention.

It will be appreciated that while unbeneficiated phosphate ore may be used to economic advantage, the process can also be used to reduce treated or beneficiated phosphate ore.

The effect of silica on the yield of the reaction between the phosphate in the ore and carbon has not heretofore been recognised, and, in fact, is unexpected because of melting considerations to be hereinafter discussed. In U.S. Patent Nos. 3,235,330 and 3,241,917, adjustment of the silica ratio of the feed mixture was only considered in order to adjust the ratio of $CaO/SiO_2$ desired in the final slag product, a ratio of about 3.0 being utilized.

As hereinbefore pointed out, excessive melting of the feed mixture in the kiln may make the process in a rotary-type kiln inoperable. It has been found that melting in excess of approximately 40 percent of the feed mixture is not tolerable.

Hence, since $SiO_2$ has a lower melting point than CaO, it was heretofore believed that addition of $SiO_2$ to the feed mixture would cause more melting of the feed and consequently make the process inoperable in a rotary-type kiln. This was suggested in U.S. Patent No. 2,075,212. As a further example, in U.S. Patent No. 3,558,114, a silica to calcium oxide weight ratio of 0.6 to 2.0 (or a $CaO_2/SiO_2$ molar ratio of about 1.7 to 0.5) was required in a rotary furnace phosphate ore reduction process in order to ensure that the melting point of the slag was low enough to permit removal of liquid slag from the rotary furnace.

In order that the invention may be more readily understood, and so that further features thereof may be appreciated, a process embodying the invention is described, by way of example, with reference to the accompanying drawings, in which:

FIGURE 1 is a block diagram of a rotating kiln process for the production of phosphoric acid showing a rotary kiln for the production of phosphorus pentoxide ($P_2O_5$) and associated process apparatus;

FIGURE 2 is a diagram of a rotary-type kiln suitable for carrying out the process of the present invention;

FIGURE 3 is a graph showing the percentage reduction of phosphate from phosphate ore as a function of reaction time for sample balls having $CaO/SiO_2$ mole ratios of approximately 0.37 and approximately 3.2; and

FIGURE 4 is a graph showing the percent of melting as a function of percent reduction of phosphate values from phosphate ore in sample balls having $CaO/SiO_2$ mole ratios of approximately 0.37 and approximately 3.2.

Figure 1 illustrates, in block diagram form, a rotating kiln process for the production of phosphoric acid.

Heretofore, phosphate rock or ore suitable for use in a rotary kiln process has required prior beneficiation. Typical impurities such as iron, sodium, potassium, aluminium and particularly florine, which adversely affect the process, were removed, or at least reduced in amount, by beneficiation of the ore. The present invention, however, can eleminate this step, and as a consequence, significantly reduce the overall cost of producing, for example, phosphorus pentoxide in a rotary-type kiln.

In general, the reductive extraction of phosphorus from the beneficiated ore is the result of the reaction between a phosphate ore, such as fluorapatite, solid carbonaceous material, such as coke or coal, and silica:

$$Ca_{10}(PO_4)_6F_2 + \text{carbon} + \text{silica} + 12{,}700\ \text{BTU/lb}\ (29{,}500\ \text{kJ/kg})\ \text{phosphorus} \longrightarrow \text{phosphorus gas} + \text{carbon monoxide} + \text{calcium silicate.}$$

The reactants should be held in close proximity to each other during the course of the reaction. Hence, it is preferred that the feed materials be agglomerated to form feed balls. This agglomeration also reduces dust within the kiln and reduces clinker formation which may occur if small individual particles of a loose feed material or ore, silica and coke are fed into a rotary kiln.

As shown in Figure 1, feed balls are prepared by drying the phosphate ore and silica, grinding the phosphate ore, silica, and coke either together or separately and forming the mixture into generally spherical balls with a conventional balling pan, which are then fed to a grate furnace to drive off any volatile materials contained therein.

As indicated in Figure 1 unbeneficiated ore as mined may be used directly in the present process, examples of such ore are those having relatively low clay content such as sandy Florida matrix ore (see Table I). Alternatively, ores having relatively high clay content such as clay Florida matrix ore may be washed with water to remove the clays. In addition, the ore may be floated to remove silica to reduce shipping costs, however, if this is done the silica must be replaced during preparation of the feed mixture. Economic considerations with regard to the source of phosphate ore and the location of the kiln may make flotation of the ore to remove silica necessary. However, in the process of the present invention, removal of silica from the ore is not necessary or desirable since the removed silica must be replaced in order to achieve the desired $CaO/SiO_2$ molar ratio. Washing or flotation of the phosphate ore is not considered, within the context of this process, to constitute a beneficiation of the phosphate ore to remove impurities such as iron, sodium, potassium, aluminium and fluorides.

In the following Tables, Table I shows the chemical compositions of various ores, giving the $CaO/SiO_2$ ratio for each type of ore. Ores such as Tennessee ore may be used directly in the process of the present invention without washing as the $CaO/SiO_2$ ratio is approximately 0.30. Table I also illustrates the effect of washing and floating the ores.

In Table II, the same phosphate ores are shown with added silica to bring the $CaCO/SiO_2$ ratio to below 0.50. These ores are suitable for reduction and production of $P_2O_5$ by the process of the present invention.

## Table I

### Chemical Compositions of Various Ores

| | Florida Matrix Ores | | | Tennesse Ores | | Simplot Ore | Baja Ore | Eqypt Ore | Chinese Ore |
|---|---|---|---|---|---|---|---|---|---|
| | Washed | Sandy | Clay | Unwashed | Floated | Calcined | Floated | Raw | Raw |
| $P_2O_5$ | 14.2 | 11.4 | 12.6 | 14.5 | 31.6 | 33.1 | 29.8 | 28.0 | 32.0 |
| $CaO$ | 19.54 | 15.50 | 17.70 | 17.6 | 43.0 | 49.4 | 41.70 | 41.7 | 48.0 |
| $SiO_2$ | 54.72 | 58.66 | 51.60 | 59.3 | 8.8 | 9.08 | 7.25 | 6.22 | 4.0 |
| $MgO$ | | | | | | 0.66 | 0.23 | 1.26 | 1.3 |
| $Al_2O_3$ | 2.5 | 2.47 | 3.65 | 3.43 | 2.55 | 0.85 | 0.52 | 0.9 | 1.1 |
| $Fe_2O_3$ | 0.53 | 0.48 | 1.6 | 4.90 | 4.78 | 0.34 | 0.58 | 3.9 | 1.5 |
| $Na_2O$ | 0.38 | 0.29 | 0.34 | 0.25 | | 0.68 | 0.58 | 0.4 | 0.21 |
| $K_2O$ | 0.61 | 0.89 | 0.56 | 1.10 | | 0.33 | 0.28 | 0.08 | 0.39 |
| F | | | | 0.53 | | 2.48 | 3.41 | 3.0 | 3.0 |
| TOC | | | | | | 0.01 | | | |
| LOI | | | | | | | | 3.8 | |
| $U_3O_8$ | | | | | | 100(ppm) | | 29(ppm) | -- |
| $(CaO/SiO_2)$ | 0.36 | 0.26 | 0.34 | 0.30 | 3.6 | 54.4 | 5.75 | 6.7 | 12.0 |

Table II

Chemical Compositions of Feed Mixtures Made from Various Ores

| | Florida Matrix Ores | | | Tennesse Ores | | Simplot Ore | Baja Ore | Eqypt Ore | Chinese Ore |
|---|---|---|---|---|---|---|---|---|---|
| | Washed | Sandy | Clay | Unwashed | $+SiO_2$ Floated | $+SiO_2$ | $+SiO_2$ Floated | $+SiO_2$ Raw | $+SiO_2$ Raw |
| $P_2O_5$ | 14.2 | 11.4 | 12.6 | 14.5 | 10.53 | 10.03 | 9.93 | 9.33 | 10.67 |
| CaO | 19.54 | 15.50 | 17.70 | 17.6 | 14.3 | 16.5 | 13.9 | 13.9 | 16.00 |
| $SiO_2$ | 54.72 | 58.66 | 51.60 | 59.3 | 47.78 | 54.89 | 46.33 | 46.33 | 53.33 |
| MgO | | | | | | 0.59 | 0.20 | 1.15 | 1.2 |
| $Al_2O_3$ | 2.5 | 2.47 | 3.65 | 3.43 | 2.22 | 0.76 | 0.46 | 0.82 | 1.0 |
| $Fe_2O_3$ | 0.53 | 0.48 | 1.6 | 4.90 | 4.16 | 0.30 | 0.52 | 3.57 | 1.4 |
| $Na_2O$ | 0.38 | 0.29 | 0.34 | 0.25 | | 0.60 | 0.52 | 0.4 | 0.20 |
| $K_2O$ | 0.61 | 0.89 | 0.56 | 1.10 | | 0.29 | 0.25 | 0.07 | 0.37 |
| F | | | | 0.53 | | 2.20 | 3.04 | 2.7 | 2.9 |
| TOC | | | | | | 0.01 | | | |
| LOI | | | | | | | | 3.5 | |
| $U_3O_8$ | | | | | | 89(ppm) | | 27(ppm) | -- |
| $(CaO/SiO_2)$ | 0.36 | 0.26 | 0.34 | 0.30 | 0.30 | 0.30 | 0.30 | 0.30 | 0.30 |

As shown in Figure 1, the volatile gases emitted from the feed balls in the grate furnace are passed for elimination from the system through a scrubber. The feed balls, which are now pre-heated, are fed into a rotary kiln. After treatment in the kiln, solid residue, or slag, is removed from the rotary kiln and passed through a cooler for cooling the residue. Heat removed from the residue in the cooler is used simultaneously to heat input air for the rotary kiln. Product gas, or vapor, e.g. $P_2O_5$, is removed from the rotary kiln and passed through a dust removal stage and a hydrator, to form phosphoric acid, and thereafter is cleaned to produce product phosphoric acid as is well known in the art.

While a rotary kiln is shown in Figures 1 and 2 and described herein in connection with the process of the present invention, it is to be appreciated that other types of kiln or furnaces, such as a tunnel, or grate, furnace may be employed.

Figure 2 more particularly illustrates a rotary-type kiln 10 suitable for carrying out the process of the present invention. A rotary kiln is particularly suited for the reduction of phosphate ores because of its efficiency in transferring heat directly to a bed 12 consisting of agglomerated feed particles or balls 14, as hereinabove described. The illustrated rotary-type kiln 10 is of conventional design, having stationary end portions 16, 18, and a rotating center section, or cylinder, 20 lined with a suitable refractory material 22, interconnected therewith. The cylinder 20 may be rotated by any suitable mechanism (not shown).

Fuel and air, or oxygen, are fed to a burner 26 which produces a flame 28 for directly heating the bed 12. It is to be appreciated that the term "flame" is intended to include either the luminous portions of an oxidizing reaction, the hot gases associated therewith, or both.

In order to initiate or "start-up" the process, a conventional fuel may be used to preheat the kiln center portion 20 and the bed 12, but as the reaction in the bed produces elemental phosphorus vapor and carbon monoxide which are burned in an oxidation zone 30, less fuel is required once the process is operating. Sufficient air or oxygen must be provided to oxidize the phosphorus and the carbon monoxide above the bed in the

oxidation zone 30 for heating the bed by radiation therefrom.

The process of the invention is particularly suitable for the reduction of phosphate ores such as fluorapatite ($Ca_{10}(PO_4)_6F_2$), the reduction reaction being generalized as:

$$Ca_{10}(PO_4)_6F_2 + 15C + 9 x SiO_2 \longrightarrow$$
$$15CO + 3/2P_4 + 9[CaO x SiO_2] + CaF_2,$$
where $0 \leq x \leq 5$.

Little reaction kinetic information has been known regarding the hereinabove noted reduction reaction for phosphorus oxide. This may be due to the fact that prior furnace techniques for the reduction of phosphorus oxides proceeded in the molten phase. Hence, kinetic studies in the literature were concerned with liquid phase reduction. In the process of this invention, however, the melting of the solids in the feed balls 14 within the bed 12 leads to agglomeration or clinkering of the feed balls, which causes undesirable material handling problems in the operation of rotary-type kilns and inhibits the reduction reaction thus producing less phosphorus yield from the feed.

As described below, the effect of silica on the rate and reduction of phosphorus from phosphate ore was experimentally assessed using a thermogravimetric analyzer (TGA) (not shown) consisting of an electronic balance, closed furnace, temperature control, gas mixing system, sample boat, and a recording system. The analyzer, which is typical of those well known in the art, measures the weight of a material and its rate of change continuously, either as a function of increasing temperature and/or preselected temperature over a period of time.

Table III

Material Analysis for Sample Ore Balls

| Material | Mesh Size | Analysis | |
|---|---|---|---|
| Phosphate Rock | -325 | CaO | 45.2% |
| | | $P_2O_5$ | 32.0% |
| | | $SiO_2$ | 6.0% |
| | | $Al_2O_3$ | 0.96% |
| | | MgO | 0.33% |
| | | $Fe_2O_3$ | 0.76% |
| | | F- | 3.7% |
| Green Coke | -325 | Fixed Carbon | 89.5% |
| | | Volatiles | 10.5% |
| Silica | -325 | $SiO_2$ | 97.7% |

Phosphate rock, green coke, and silica having a composition as shown in Table III were individually ground and formed into approximately one (1) gram, 3/8 inch (10mm) diameter, sample ore balls, one group of balls having a CaO to $SiO_2$ mole ratio of approximately 3.2, and another group of balls having a CaO to $SiO_2$ mole ratio of approximately 0.37. The sample balls were dried at 110°C and thermogravimetric analysis was then performed on the samples isothermally at a number of temperatures from 1300 to 1500°C.

Results of the thermogravimetric analysis at about 1320°C, which included heating the ore balls at a rate of approximately 3°C per minute carbon monoxide atmosphere are shown in Figure 3.

In Figure 3 the percentage reduction of phosphate in sample balls having a CaO/$SiO_2$ mole ratio of 0.37 and 3.2. and are plotted as a function of reaction time.

As discussed hereinabove, it has also been observed that feed ball melting is dependent on the $CaO/SiO_2$ ratio. As illustrated in Figure 4, present experiments, including the heating of ore balls having various $CaO/SiO_2$ ratios, have shown that at a $CaO/SiO_2$ mole ratio of about 0.37, significant ore ball melting does not occur, compared to a conventional $CaO/SiO_2$ mole ratio of about 3.2. Figure 4 plots percentage of melting, as observed by microscopic analysis of heated sample balls, as a function of percent reduction of phosphate values in the phosphate ore.

The following examples are presented by way of illustration only and are not to be considered limiting to the present invention:

## EXAMPLE I

Feed material was prepared using washed and floated Mexican phosphate ore mined in Baja containing 30.8% wt. $P_2O_5$, 47.8% wt. CaO and 7.4% wt. $SiO_2$ and having a CaO to $SiO_2$ molar ratio of about 6.9. The ore and calcined, delayed petroleum coke were co-ground in a ball mill to about 77% -325 mesh. The ground coke/ore mixture was then blended with the fine silica flour having a particle size of 83% -325 mesh using 12 weight parts water in a Simpson mix-muller. The weight percent of the solids in the feed mixture were:

| | Weight Percent |
|---|---|
| Phosphate ore | 38.4 |
| Petroleum coke | 10.3 |
| Silica sand | 51.3 |
| | 100.0 |

Pellets of nominal 1/2 inch (13mm) diameter were formed from this wet mixture using a balling disk. The pellets were dried in a travelling grate, hot air dryer. With the addition of the silica, the dried feed had a calcium oxide to silica molar ratio of approximately 0.36.

The prepared feed pellets were fed continuously to a refractory lined, rotary kiln at the rate of 600 lbs/hr (1320kg/hr). The kiln had an internal diameter of 2-3/4 ft (0.84m) and was 30 feet (9.15m) in length. The kiln was fired by a natural gas burner, with the gases passing counter current to the solid feed. The kiln rotation speed was 3 rpm and the slope was 1/8 inch per foot (10mm per metre).

The maximum solids temperature was 1459°C. Under these conditions, approximately 86% of the phosphate values in the phosphate ore were recovered. Residence time of the pellets in the kiln was approximately two hours with the pellet temperature being above about 1300°C for approximately forty minutes.

## EXAMPLE II

Dried pellet feed was prepared in the manner of Example I with the same recipe, excepting that the coke, ore and course silica sand were co-ground to 75% -200 mesh.

This feed was fed to the same continuous kiln as in Example I at a rate of 480 lbs/hr (1050 kg/hr) with 120 lbs/hr (265 kg/hr) of coarse (1/2 inch) (13mm) calcined petroleum coke. The maximum solids temperature was 1454°C. Under these conditions approximately 86% of the phosphate values in the phosphate ore were recovered.

CLAIMS

1. A process for reducing phosphate ore, comprising the steps of mixing phosphate ore with silica and solid carbonaceous material in amounts to produce a feed mixture having a $CaO/SiO_2$ mole ratio less than about 0.5; forming the feed mixture into agglomerated feed particles; heating the agglomerated feed particles, by exposure to radiation emanating from an oxidation zone, to a temperature sufficient to reduce the phosphate in the agglomerated feed particles by reaction with the solid carbonaceous material to form elemental phosphorus vapors without substantial melting of the agglomerated feed particles; and, providing sufficient oxygen-containing gas to cause oxidation of the elemental phosphorus vapor within the oxidation zone to produce a phosphorus compound and to heat the agglomerated feed particles.

2. A process according to claim 1, wherein the phosphorus compound produced is phosphorus pentoxide.

3. A process according to claim 1 or claim 2, wherein said phosphate ore is an unbenificiated phosphate ore.

4. A process according to claim 1, claim 2 or claim 3, comprising the further step of washing the phosphate ore, to remove clays therefrom, prior to said mixing with silica and solid carbonaceous material.

5. A process according to any one of claims 1 to 4, wherein said agglomerated feed particles are heated by radiation emanating from an oxidation zone within a rotary-type kiln.

6. A process according to any one of claims 1 to 5, wherein said agglomerated feed particles are heated to a temperature greater than approximately 1300°C.

7. A process according to claim 6, wherein said agglomerated feed particles are heated to a temperature greater than approximately 1300°C for approximately thirty to forty-five minutes.

8. A process according to any one of claims 1 to 7, comprising the further step of co-grinding the phosphate ore, silica and carbonaceous material, so that 50 to 85 percent of the co-ground feed mixture passes a -325 mesh, prior to forming the feed mixture into agglomerated feed particles.

9. A process according to any one of claims 1 to 8, wherein carbon monoxide is also formed on reduction of the phosphate in the agglomerated particles.

10. A process according to claim 9, further comprising the step of introducing sufficient oxygen-containing gas to cause oxidation of the carbon monoxide within the oxidation zone to heat the porous bed.

11. A process according to any one of claims 1 to 10, wherein the $CaO/SiO_2$ mole ratio is 0.3.

12. A process according to any one of claims 1 to 10, wherein at least 85 per cent of the phosphate values in the phosphate ore are recovered.

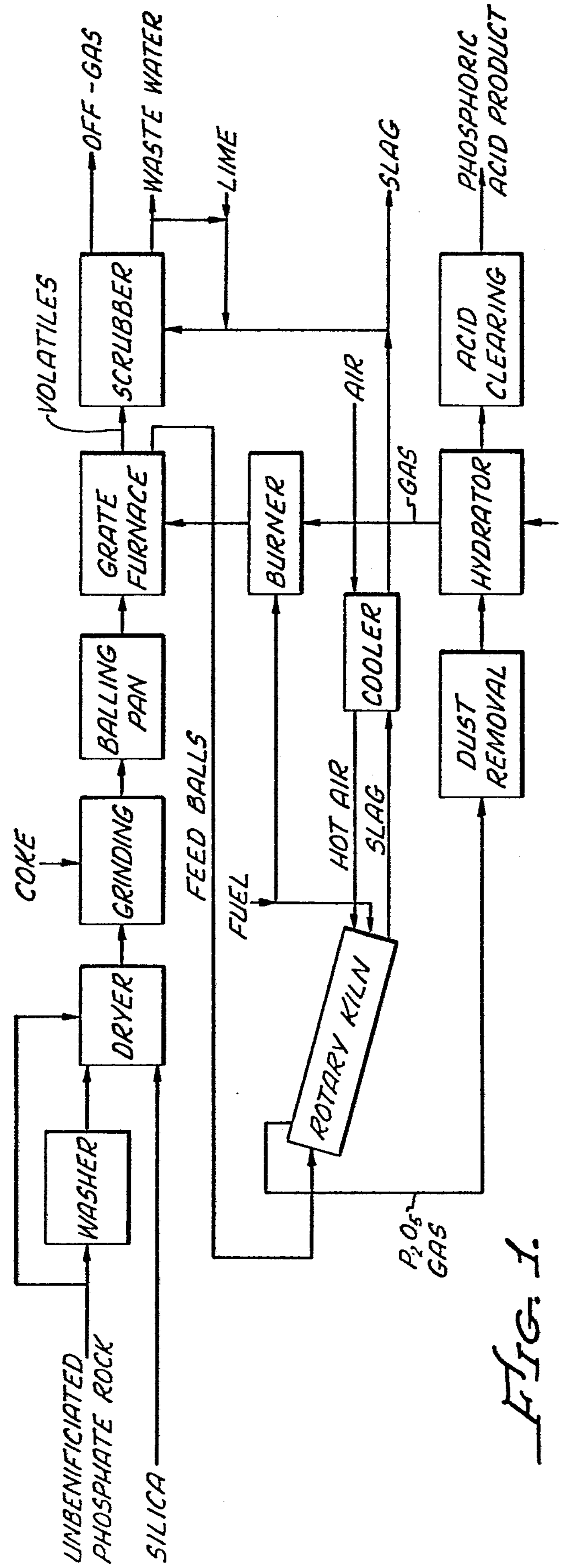
UNBENIFICIATED PHOSPHATE ROCK
SILICA
WASHER
DRYER
COKE
GRINDING
BALLING PAN
GRATE FURNACE
VOLATILES
SCRUBBER
OFF-GAS
WASTE WATER
LIME
FEED BALLS
FUEL
BURNER
HOT AIR
SLAG
AIR
COOLER
SLAG
ROTARY KILN
GAS
$P_2O_5$ GAS
DUST REMOVAL
HYDRATOR
$H_2O$
ACID CLEARING
PHOSPHORIC ACID PRODUCT

FIG. 1.

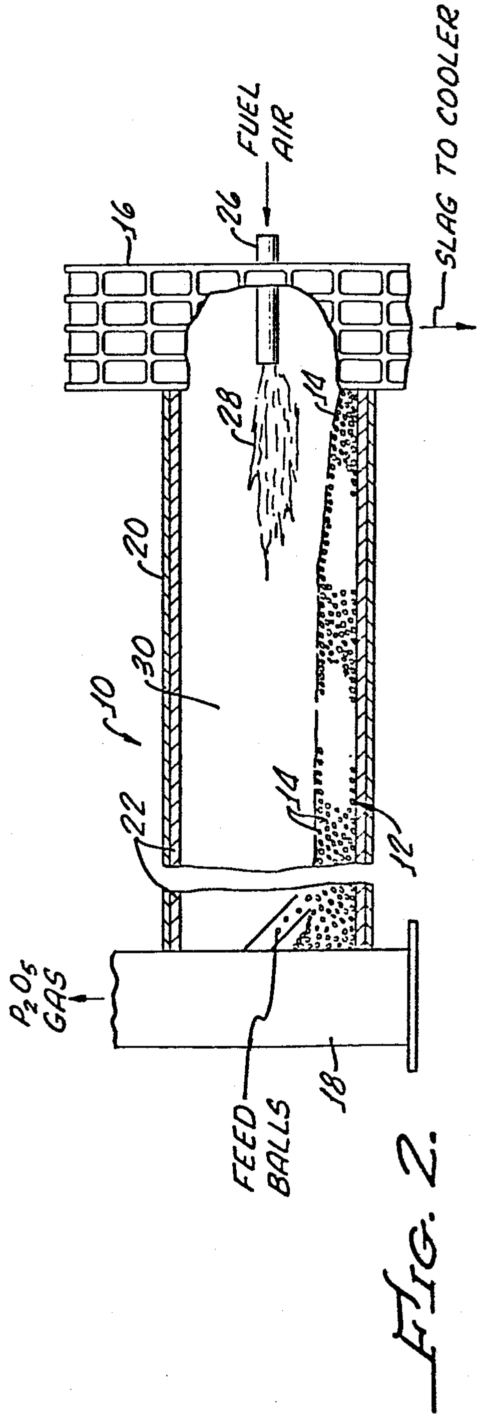
$P_2O_5$ GAS
FEED BALLS
18
22
14
12
10
30
20
28
14
16
26
FUEL
AIR
SLAG TO COOLER

FIG. 2.

0093952



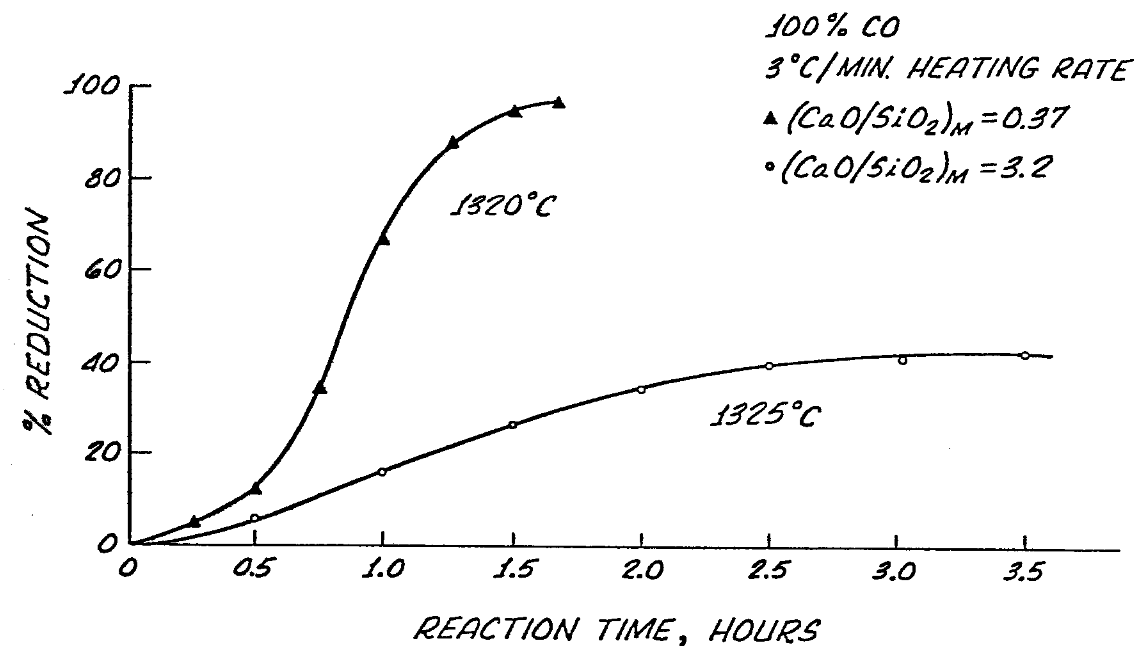


FIG. 3.

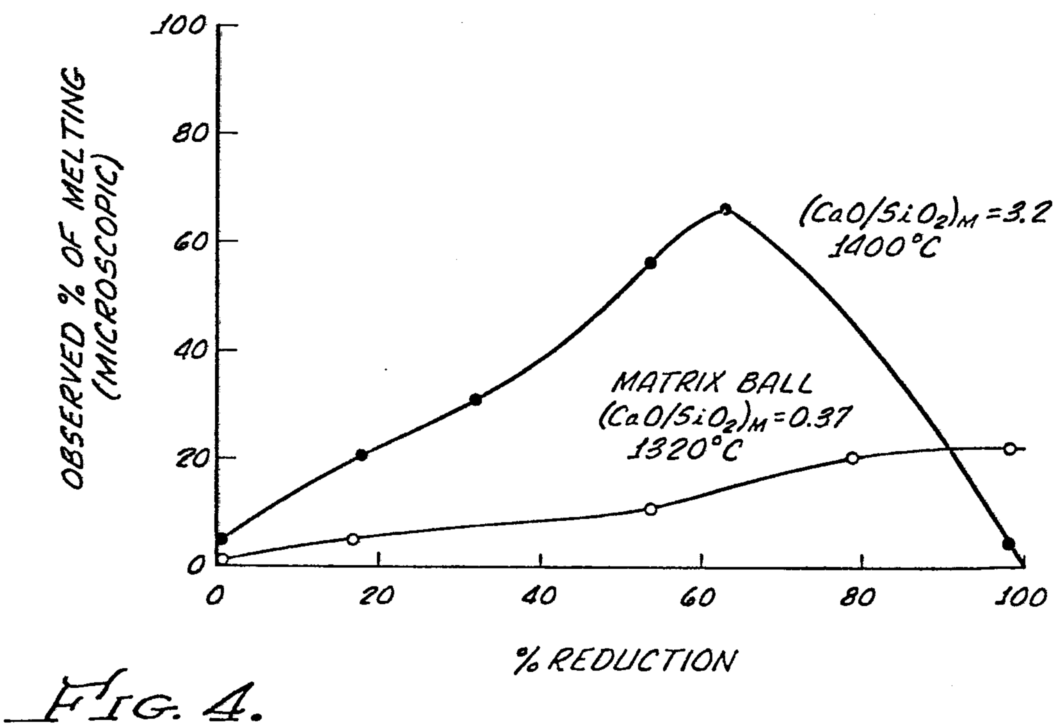


FIG. 4.

European Patent Office

# EUROPEAN SEARCH REPORT

0093952

Application number

EP 83 10 4105

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| P,A | US-A-4 351 809 (J.A. MEGY et al.) * Column 3, lines 10-55; figure 5 * --- | | C 01 B 25/01<br>C 01 B 25/12<br>C 01 B 25/20 |
| P,A | US-A-4 351 813 (J.A. MEGY et al.) * Claims 9-13 * --- | | |
| A | US-A-3 335 094 (W.J. DARBY) * Claims 1, 2 * --- | | |
| A | US-A-3 479 138 (W.C. SAEMAN) * Claims 1-4 * --- | | |
| D,A | US-A-3 241 917 (W.C. LAPPLE) * Claim 2 * --- | | TECHNICAL FIELDS SEARCHED (Int. Cl. 3) |
| D,A | US-A-3 235 330 (W.C. LAPPLE) * Claim 1 * ----- | | C 01 B 25/00 |

The present search report has been drawn up for all claims

| Place of search | Date of completion of the search | Examiner |
|---|---|---|
| BERLIN | 09-08-1983 | ASSOGNA R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82